## Europäisches Patentamt
## European Patent Office
## Office européen des brevets

(19)

(11) Veröffentlichungsnummer: **0 235 326**
**B1**

(12) # EUROPÄISCHE PATENTSCHRIFT

(45) Veröffentlichungstag der Patentschrift:
**14.12.88**

(51) Int. Cl.⁴: **G 01 C 19/36**

(21) Anmeldenummer: **86102742.3**

(22) Anmeldetag: **03.03.86**

(54) **Navigationsverfahren.**

(43) Veröffentlichungstag der Anmeldung:
**09.09.87 Patentblatt 87/37**

(45) Bekanntmachung des Hinweises auf die Patenterteilung:
**14.12.88 Patentblatt 88/50**

(84) Benannte Vertragsstaaten:
**DE FR GB IT**

(56) Entgegenhaltungen:
**DE-A-2 927 325**
**US-A-2 854 763**
**US-A-3 837 086**

**PATENTS ABSTRACTS OF JAPAN, Band 7, Nr. 117 (P-198) 1262 , 21. Mai 1983; & JP-A-58 37 511 (TOKYO KEIKI K.K.) 04-03-1983**
**PATENTS ABSTRACTS OF JAPAN, Band 9, Nr. 97 (P-352) 1820 , 26. April 1985; & JP-A-59 224 512 (HITACHI SEISAKUSHO K.K.) 17-12-1984**

(73) Patentinhaber: **LITEF GmbH, Lörracher Strasse 18, D-7800 Freiburg/Br. (DE)**

(72) Erfinder: **Hassenpflug, Wolfgang, Dipl.- Ing., Reutestrasse 2, D-7800 Freiburg i.Br. (DE)**

(74) Vertreter: **Patentanwälte TER MEER - MÜLLER - STEINMEISTER, Mauerkircherstrasse 45, D-8000 München 80 (DE)**

EP 0 235 326 B1

**Beschreibung**

Die Erfindung betrifft ein Navigationsverfahren für Fluggeräte nach dem Oberbegriff des Patentanspruchs 1. Ein derartiges Verfahren ist aus der US-A-2 854 763 bekannt. Unter "Fluggeräten" werden dabei Start- und Drehflügler, aber auch sonstige bemannte oder unbemannte Flugkörper verstanden.

Für eine Reihe von Fluggeräten werden kurs- und geschwindigkeitsgestützte Trägheitssysteme mit Kreiseln verwendet, die im allgemeinen eine relativ geringe Güte, d. h. große Drift, aufweisen. Zur Kursstützung wird ein externer Kurssensor, beispielsweise ein Magnetfelddetektor, etwa ein dreiachsiges Magnetometer, verwendet. Fällt bei diesen Systemen die Kursstützung aus, so wird der Kursfehler und damit der Navigationsfehler schnell unzulässig groß. Eine Möglichkeit, diesen Mangel zu beseitigen, bestünde in der Verwendung von Kreiseln geringer Drift. Diese Lösung des Problems wird jedoch aus wirtschaftlichen Gründen in vielen Fällen ausscheiden.

Der Erfindung liegt die Aufgabe zugrunde, ein Navigationsverfahren anzugeben, mit dessen Hilfe sich bei Ausfall der Kursstützung der Kursfehler gleichwohl in engen Grenzen halten läßt.

Die erfindungsgemäße Lösung ist im Patentanspruch 1 angegeben und beruht auf dem Gedanken, aus dem zuletzt vor Ausfall des Kurssensors bestimmten, um die örtliche Deklination korrigierten Magnetkurs, der vorzugsweise als über eine bestimmte Zeitperiode gemittelter Wert gespeichert wird, und dem aus dem Quotienten der beiden Kreiselhorizontachsen ermittelten, durch die Kreiseldrift korrumpierten rechtweisenden Kurs einen im folgenden auch als "synthetischer Magnetkurs" bezeichneten Kurs zu bestimmen, der dann bei Ausfall des Kurssensors zur Kursstützung verwendet wird. Dabei wird selbstverständlich vorausgesetzt, daß vor Ausfall des magnetischen Kurssensors eine ordnungsgemäß kalibrierte Magnetstützung vorhanden war.

Aus der DE-A-2 927 325 ist eine Meßeinrichtung zur Bestimmung des Kurses eines Landfahrzeugs bekannt, bei der ein magnetischer Kursgeber und ein kurzzeitstabiler Kursgeber eingesetzt sind. Bei Störungen im Erdmagnetfeld wird das ermittelte Kurssignal im wesentlichen durch das Signal des kurzzeitstabilen Kursgebers bestimmt.

Bei dem aus Patents Abstracts of Japan, Bd. 9, Nr. 97, (P - 352) [1820], 26.04.85, bekannten Navigationsverfahren für Landfahrzeuge wird, wenn eine Störung im Erdmagnetfeld eintritt, auf die Daten zurückgegriffen, die kurz vor Eintreten der Störung aufgenommen worden sind.

In der US-A-3 837 086 ist es beschrieben, den Differenzwinkel zwischen dem von einem magnetischen Kurssensor ermittelten Kurs und dem von einem kreiselbestückten Kurssensor autonom bestimmten Kurs laufend zu messen, um ein Abweichungssignal zu bilden, das dem über eine längere Zeitperiode hinweg gemittelten Differenzwinkel entspricht.

Vorteilhafte Weiterbildungen des Erfindungsgedankens sind in den Ansprüchen 2 bis 5 gekennzeichnet.

Im Rahmen des Erfindungsgedankens wird unter "Ausfall des magnetischen Kurssensors" oder "Ausfall der Kursstützung" auch eine notwendige Abschaltung des magnetischen Kurssensors verstanden, wenn dieser, bedingt durch die Fluglage und Flugdynamik, nicht mehr genau genug zu messen imstande ist.

Im allgemeinen wird und muß bei einem Ausfall der Kursstützung mittels des magnetischen Kurssensors in die Betriebsart "Kurskreisel", d. h. auf Kursbestimmung mittels des Trägheitssystems mit Kreiseln geringer Güte umgeschaltet werden. Dies führt jedoch zu erheblichen Navigationsungenauigkeiten, da die großen Kreiseldriften den Kurs verfälschen.

Dies sei anhand eines Beispiels erläutert:

Mit einer gut kalibrierten Magnetfeldsonde, z. B. einem Magnetometer oder einem Flux Valve und unter entsprechender Berücksichtigung der örtlichen magnetischen Mißweisung (Deklination), läßt sich der wahre Nordkurs mit einer Genauigkeit von 0,3° 1σ bestimmen, während die Genauigkeit des autonom mittels Trägheitssystem bestimmten Kurses bei einer Kreiseldrift von z. B. 0,3°/h und einer geographischen Breite von z. B. 50° 1,8° 1σ beträgt. Durch das erfindungsgemäße Verfahren läßt sich der Kurs auch nach Ausfall des Kurssensors dagegen mit einer wenigstens sehr stark angenäherten Genauigkeit bestimmen, mit der auch der wahre Nordkurs aus dem magnetischen Kurssensor unter Berücksichtigung der örtlichen Mißweisung bestimmt werden kann. Auch bei Ausfall des magnetischen Kurssensors ist also weiterhin eine Kursbestimmung mit etwa der ursprünglichen Genauigkeit möglich, insbesondere dann, wenn ein geschwindigkeitsgestütztes Kreiselsystem vorhanden ist.

Dem erfindungsgemäßen Navigationsverfahren liegen folgende mathematisch veranschaulichte Überlegungen zugrunde:

$$\psi_m + \delta_{(\varnothing, \lambda)} = \psi = \delta_\psi + \psi_A \tag{1}$$

$$\delta_\psi = \frac{\varepsilon}{\Omega \cdot \cos \varnothing} \tag{2}$$

In diesen Gleichungen gelten für die gewählten Zeichen folgende Bestimmungen:

| | |
|---|---|
| ε | = Kreiseldrift |
| Ω | = Erddrehgeschwindigkeit (Erdwinkel-geschwindigkeit) |
| $\psi_m$ | = Magnetkurs |
| $\delta_{(\varnothing, \lambda)}$ | = örtliche Mißweisung (Deklination) |
| ψ | = wahrer Nordkurs |
| $\psi_A$ | = autonom bestimmter Kurs (beispielsweise mittels Strap-Down-Kreiselsystem) |
| ∅ | = geographische Breite |
| λ | = geographische Länge |

Der Differenzwinkel δψ ist gemäß Gleichung (2) bestimmt durch die Kreiseldriften ε, die Erdwinkelgeschwindigkeit Ω und ist zusätzlich abhängig von der geographischen Breite ∅. Gemäß der Erfindung wird zur Bestimmung des Differenzwinkels δψ die wahre Nordrichtung mittels des magnetischen Kurssensors durch Hinzufügen der örtlichen Mißweisung $\delta_{(\varnothing, \lambda)}$ ermittelt, und aus dem Vergleich mit dem autonom bestimmten Kurs wird der sich aus der Kreiseldrift und der geographischen Breite ergebende Differenzwinkel δψ bestimmt. Aus der laufenden Bestimmung bzw. Beobachtung des Differenzwinkels δψ über der Zeit wird vorteilhafterweise ein mittlerer Differenzwinkel $\overline{\delta\psi}$ abgeleitet und entsprechend für einen bestimmten Zeitraum gespeichert, so daß bei Ausfall des magnetischen Kurssensors der wahre Nordkurs aus dem autonom bestimmten Kurs $\psi_A$ und dem zuletzt ermittelten mittleren und unter Berücksichtigung der momentanen geographischen Breite fortgeschriebenen Differenzwinkel $\overline{\delta\psi}$ entsprechend Gleichung (1) bestimmt werden kann.

Der Vorteil der Erfindung besteht darin, daß der so ermittelte wahre Nordkurs um den mittleren Differenzwinkel $\overline{\delta\psi}$ genauer ist als der autonom mittels des driftbehafteten Kreiselsystems bestimmbare Kurs.

**Patentansprüche**

1. Navigationsverfahren für Fluggeräte, die zur autonomen, bedarfsweisen Richtungsbestimmung mit Kreiseln geringer Güte ausgerüstet sind und deren Kurs mit Bezug auf den mittels eines kalibrierten, magnetischen Kurssensors unter Berücksichtigung der örtlichen magnetischen Mißweisung festgelegten wahren Nordkurs bestimmt wird, dadurch gekennzeichnet, daß zur Kursbestimmung und zur Kursstützung bei Ausfall des magnetischen Kurssensors

- der Differenzwinkel (δ ψ) zwischen dem wahren Nordkurs, gewonnen durch eine die Mißweisung berücksichtigende Korrektur des vom Kurssensor vor dem Ausfall ermittelten Kurses, und dem autonom bestimmten Kurs ($\psi_A$) laufend gemessen und gespeichert wird und
- der wahre Nordkurs, bei Ausfall des magnetischen Kurssensors, aus dem autonom bestimmten, durch Kreiseldriften korrumpierten Kurs ($\psi_A$) durch Addition des zuletzt ermittelten Differenzwinkels (δ ψ) bestimmt wird.

2. Navigationsverfahren nach Anspruch 1, dadurch gekennzeichnet, daß als magnetischer Kurssensor ein kalibriertes dreiachsiges Magnetometer verwendet wird.

3. Navigationsverfahren nach Anspruch 1, dadurch gekennzeichnet, daß als magnetischer Kurssensor ein kalibriertes Flux Valve verwendet wird.

4. Navigationsverfahren nach einem der vorstehenden Ansprüche, dadurch gekennzeichnet, daß als Korrektur-Differenzwinkel ein über eine festgelegte Zeitperiode aus mehreren Meßwerten gemittelter Differenzwinkel ($\overline{\delta\psi}$) bestimmt wird und daß der zuletzt gespeicherte Wert des gemittelten Differenzwinkels entsprechend der momentanen geographischen Breite korrigiert fortgeschrieben wird.

5. Navigationsverfahren nach einem der vorstehenden Ansprüche, dadurch gekennzeichnet, daß die in die autonome Kursbestimmung eingehenden geschwindigkeitsabhängigen Fehler mit Hilfe einer Geschwindigkeitsreferenz, z. B. Doppler-Radar, kompensiert werden.

**Claims**

1. Navigation method for aircraft which are equipped for the independent determination of direction, in a case of necessity, by means of gyros of low quality and the course of which is determined with reference to the true north course established by means of a calibrated magnetic course sensor with consideration of the local magnetic variation, characterized in that, for the course determination and for the course support in the event of failure of the magnetic course sensor

- the differential angle (δ ψ) between the true north course which is obtained by a correction of the course determined by the course sensor prior to the failure which takes into consideration the magnetic variation, and the independently determined course ($\psi_A$) is continuously measured and stored, and
- the true north course is determined, in the event of failure of the magnetic course sensor, from the independently determined course ($\psi_A$) corrupted by gyro drifts by the addition of the last determined differential angle ($\delta \psi$).

2. Navigation method according to Claim 1, characterized in that a calibrated three-axis magnetometer is employed as magnetic course sensor.

3. Navigation method according to Claim 1, characterized in that a calibrated flux valve is employed as magnetic course sensor.

4. Navigation method according to one of the preceding claims, characterized in that a differential angle ($\bar{\delta\psi}$) averaged over a specified period of time from a plurality of measured values is determined as correction differential angle, and in that the last stored value of the averaged differential angle is extrapolated, corrected according to the instantaneous latitude.

5. Navigation method according to one of the preceding claims, characterized in that the speed-dependent errors entering into the independent course determination are compensated by means of a speed reference, e.g. Doppler radar.

## Revendications

1. Procédé de navigation pour engins volants qui sont équipés de gyroscopes de faible qualité pour déterminer en cas de besoin leur direction de façon autonome et dont le cap est déterminé en se référant au cap nord véritable établi au moyen d'un détecteur de cap magnétique calibré et en tenant compte de la déclinaison magnétique locale, caractérisé en ce que pour déterminer le cap et pour maintenir le cap en cas de défaillance du détecteur de cap magnétique

- l'angle différentiel ($\delta \psi$) entre le cap nord véritable obtenu par une correction du cap déterminé par le détecteur de cap avant sa défaillance et en tenant compte de la déclinaison et le cap déterminé de façon autonome ($\psi_A$) est mesuré de façon continue et mis en mémoire, et
- le cap nord véritable, en cas de défaillance du détecteur de cap magnétique, est déterminé à partir du cap déterminé de façon autonome ($\psi_A$) modifié par la déclinaison du gyroscope par addition de l'angle différentiel ($\delta \psi$) qui a été détecté le dernier.

2. Procédé de navigation selon la revendication 1, caractérisé en ce que l'on utilise en tant que détecteur de cap magnétique un magnétomètre calibré à trois axes.

3. Procédé de navigation selon la revendication 1, caractérisé en ce que l'on utilise en tant que détecteur de cap magnétique un fluxmètre calibré.

4. Procédé de navigation selon l'une quelconque des revendications précédentes, caractérisé en ce que l'on détermine un angle différentiel ($\bar{\delta\psi}$) en tant qu'angle différentiel de correction obtenu sur une période de temps déterminée à partir de plusieurs valeurs de mesure et en ce que la valeur de l'angle différentiel déterminé qui a été mis en mémoire en dernier est corrigée de façon continue en fonction de la largeur géographique momentanée.

5. Procédé de navigation selon l'une quelconque des revendications précédentes, caractérisé en ce que les erreurs provoquées par la vitesse et qui s'incorporent à la détermination autonome du cap sont compensées à l'aide d'un dispositif de référence de vitesse tel qu'un radar Doppler.